# EUROPEAN PATENT APPLICATION

(11) **EP 2 579 133 A1**
(43) Date of publication of application: **10.04.2013**
(21) Application number: 11789500.3
(22) Date of filing: 24.02.2011
(51) Int. Cl.: G06F 3/042, G06F 3/041

(54) **POSITION DETECTING DEVICE AND IMAGE PROCESSING SYSTEM**

(30) Priority: 01.06.2010 JP 2010125813
(71) Applicant: Hitachi Solutions, Ltd., Tokyo 140-0002 (JP)
(72) Inventor: KAWASAKI Tadashi, Tokyo 140-0002 (JP)
(74) Representative: Liesegang, Eva
(86) International application number: PCT/JP2011/054065
(87) International publication number: WO 2011/152088

(57) **Abstract**

The present invention provides a position detecting device which is operable even when a distance from an image sensor to a corner portion of a coordinate inputting device is shortened, and which enables cost reduction, and an image processing system having the same. In the present invention, a position detecting device is placed on an upper surface portion of a frame body of a coordinate inputting device, and each of at least two image sensors has a wide-angle lens which covers a substantially entire region of side surface and bottom surface portions of the frame body as an image pickup range. The at least two image sensors are arranged adjacent to a control device and fixed to the control device. The position detecting device is placed substantially in a center of the upper surface portion of the coordinate inputting device.

## Description

### Technical Field

The present invention relates to a position detecting device and an image processing system, and for example, to an image processing system which detects coordinates of an instructing body on an input surface of a coordinate inputting device, performs image processing of a trajectory of the instructing body on the input surface, and displays the trajectory on a display device, and a position detecting device for use therein.

### Background Art

In recent years, interactive white boards (IWB) are becoming popular. The IWBs are a system which enables to input characters on a display screen of a PDP, an LCD, a projector and the like, which are used as general display devices, as if the characters were written on a blackboard with chalk. In the system, an inputting section such as a finger and an electronic pen, and a position detecting device are used, input information is processed in a computing device such as a PC, and a processing result is projected onto a display device, to thereby enable the inputting of characters.

Tablets, touch panels or the like are beginning to be popular as a coordinate inputting device using a position detecting technique. Various methods such as an electromagnetic induction method and an ultrasonic method have been put to practical use as the technique for position detection. Since a position detecting device using image processing by an image sensor has a good drawing response, and high resistance to external noise such as infrared rays, solar rays, and a temperature change, the position detecting device has been increasingly used every year and is beginning to be popular. Patent Literatures 1 and 2 disclose examples of an image processing system having the position detecting device using the image sensor.

The image processing systems disclosed in Patent Literatures 1 and 2 have a coordinate inputting device (an interactive white board: having an input surface, and right, left, and lower side surfaces to which a reflective tape is attached), and the position detecting device (composed of the image sensor and a control device which processes an acquired image from the image sensor).

In the position detecting device, two or more image sensors are used to detect an input position (the position of an instructing section (a pointing device) such as a pen), and the position of the instructing section is calculated by detecting the position of the instructing section on the input surface with respect to a plurality of visual field positions, and calculating the position using trigonometry. A plurality of light sources for emitting light, such as LEDs, are also placed adjacent to each of the image sensors. Each LED emits light onto the reflective tape placed on a reflective frame that is placed so as to surround the periphery of the input surface. Since a reflective material having retro-reflectivity such as a corner cube reflector is used for the reflective tape, the light ray emitted from the LED is retro-reflected in the same direction as an incident direction on the retro-reflective tape. The image sensor receives the reflected light. A shadow is detected on the image sensor by creating an environment in which the light ray is emitted onto the input surface as described above, and blocking the light ray with the instructing body approaching the input surface. The position is acquired by the plurality of image sensors, and the control device calculates the coordinates. Since it is necessary to mount the image sensors to the periphery of the coordinate inputting device, the size of the above position detecting device in a longitudinal direction depends on the size of the coordinate inputting device in a lateral direction.

### Citation List

### Patent Literature

Patent Literature 1: JP Patent No. 3931030
Patent Literature 2: JP Patent No. 3986710

### Summary of Invention

### Technical Problem

In the image processing systems disclosed in Patent Literatures 1 and 2, an image pickup lens is placed on each of the image sensors so as to receive the reflected light from the entire reflective tape onto the image sensor. Since the image sensor has a size of only about several to ten and several square mm, the image pickup lens also needs to have a size suited thereto. Since an image pickup lens having a field angle of about 90 degrees, which is easily available, is generally used as the image pickup lens for position detection, the image sensor needs to be placed at right and left corners of the coordinate inputting device (the interactive white board). The sensor placed at a left upper corner can pick up an image of the reflective tape on the right side surface and the lower surface of the coordinate input surface, but cannot pick up an image of the reflective tape on the left side surface since the reflective tape on the left side surface is out of the field angle. Similarly, the sensor placed at a right upper corner can pick up an image of the reflective tape on the left side surface and the lower surface of the input surface, but cannot pick up an image of the reflective tape on the right side surface since the reflective tape on the right side surface is out of the field angle.

Also, in the image processing systems according to Patent Literatures 1 and 2, the right and left image sensors need to be placed at the right and left upper corners of the coordinate inputting device, so that a distance between the right and left image sensors is increased when the input surface of the coordinate inputting device has a larger area. Thus, there occurs a problem that the position detecting device has a larger size. That is, it is necessary to prepare position detecting devices for each size of the coordinate inputting device.

Moreover, in the image processing systems according to Patent Literatures 1 and 2, right and left lower corner portions of the coordinate inputting device are farthest from the respective image sensors arranged as above. The plurality of light sources for emitting light, such as the LEDs, are also placed adjacent to each of the image sensors, and each LED emits light onto the reflective tape placed on the reflective frame that is placed so as to surround the periphery of the input surface. The light emitted from the LED is retro-reflected in the same direction as the incident direction on the retro-reflective tape, and the image sensor receives the reflected light. While the image sensor captures the intensity of light as sensitivity, light from the corner portion having a longest optical path length from the LED is most attenuated, so that the sensitivity is lowered. The corner portion has relatively lower sensitivity than another portion as described above. When the board is vibrated, the optical path is also vibrated, and the sensitivity of the corner portion may thereby instantaneously become zero in some cases. At this time, there occurs a problem that the image sensor may determine that an object is detected, to thereby cause malfunction.

The present invention has been made in view of the above circumstances, and it is an object thereof to provide a position detecting device which is operable even when a distance from an image sensor to a corner portion of a coordinate inputting device is shortened, and which enables cost reduction, and an image processing system having the same.

### Solution to Problem

To achieve the above object, a wide-angle lens is used for an image pickup lens mounted to an image sensor.

That is, an image processing system according to the present invention includes a coordinate inputting device, a position detecting device, a computing device, and a display device. The coordinate inputting device has a coordinate input surface which allows an instructing body to input a coordinate, and a frame body which is provided so as to surround at least side surface and bottom surface portions of the coordinate input surface, and a reflective member having retro-reflectivity is attached to the side surface and bottom surface portions of the frame body. The position detecting device has at least two image sensors, a plurality of light sources which are provided adjacent to each of the image sensors, and a control device. The plurality of light sources emit light onto the frame body, a light receiving element of each of the image sensors receives reflected light from the reflective member, and the control device calculates a coordinate value of the instructing body based on information of the received light. The computing device performs image processing by using the coordinate value of the instructing body calculated by the position detecting device. Then, the display device outputs an image processing result obtained by the computing device. Here, the position detecting device is placed on an upper surface portion of the frame body of the coordinate inputting device. Also, each of the at least two image sensors has a wide-angle lens which covers a substantially entire region of the side surface and bottom surface portions of the frame body as an image pickup range.

The at least two image sensors are arranged adjacent to the control device and fixed to the control device. The position detecting device is placed substantially in a center of the upper surface portion of the coordinate inputting device.

Furthermore, the computing device has a function to correct the coordinate value of the instructing body calculated by the position detecting device, and eliminate an influence of distortion of the wide-angle lens.

Also, a reflective piece which improves reflectivity is provided on the side surface portion of the frame body of the coordinate inputting device.

Further features of the present invention will become apparent from the description of embodiments considered in conjunction with the accompanying drawings.

### Advantageous Effects of Invention

The present invention can provide the image processing system which enables cost reduction by compactly forming the position detecting system.

### Brief Description of Drawings

[Figure 1] Figure 1 is a view illustrating a schematic configuration of an image processing system having a general image sensor-type position detecting device.
[Figure 2] Figure 2 is a view illustrating a schematic configuration of an image processing system according to an embodiment of the present invention.
[Figure 3] Figure 3 is a view illustrating an arrangement configuration of image sensors and a control device, and a configuration of a reflective frame of a coordinate inputting device in the general image processing system.
[Figure 4] Figure 4 is a view for explaining a position detection method of the general image sensor-type position detecting device.
[Figure 5] Figure 5 is a view for explaining a position detection method of a position detecting device according to the embodiment of the present invention.
[Figure 6] Figure 6 is a view for explaining that the position detecting device according to the embodiment of the present invention can be commonly used regardless of the size of a coordinate inputting device.
[Figure 7] Figure 7 is a view illustrating the sensitivity of position detection by the general image sensor-type position detecting device.
[Figure 8] Figure 8 is a view illustrating the sensitivity of position detection by the position detecting device according to the embodiment of the present invention.
[Figure 9A] Figure 9A is a view illustrating the sensitivity of position detection in a configuration in which no reflective piece is provided on a frame body (side surface portions) of the coordinate inputting device.
[Figure 9B] Figure 9B is a view illustrating the sensitivity of position detection in a configuration in which reflective pieces are provided on a portion of the frame body (the side surface portions) of the coordinate inputting device.
[Figure 10A] Figure 10A is a view for explaining a problem caused when a wide-angle lens is used for an image pickup lens in the embodiment of the present invention.
[Figure 10B] Figure 10B is a view for explaining the problem caused when the wide-angle lens is used for the image pickup lens in the embodiment of the present invention.
[Figure 11] Figure 11 is a view for explaining calibration between an actual position on the coordinate inputting device and a position on an image sensor.

### Description of Embodiment

In an embodiment of the present invention, a wide-angle lens is placed on an image sensor so as to form an image of a retro-reflective tape that is attached to side surface and bottom surface portions of a coordinate inputting device onto the image sensor. When the wide-angle lens is used, a reflective tape image pickup range of each of right and left image sensors can be extended to three sides (left), (bottom), (right). Thus, a distance between positions at which the image sensors are placed can be shortened, so that the length of the coordinate inputting device can be reduced.

Also, in accordance with the present embodiment, a common position detecting device can be used regardless of the size of the coordinate inputting device.

In the following, the embodiment of the present invention will be described by reference to the accompanying drawings. It should be noted that the present embodiment is merely an example embodying the present invention, and will not limit the technical scope of the present invention. Common components in the respective drawings are assigned the same reference numerals. In the following, an image processing system, a position detecting device, and a coordinate inputting device according to the embodiment of the present invention will be described in comparison with a general configuration of an image processing system, a position detecting device, and a coordinate inputting system.

### [Configuration of an image processing system]

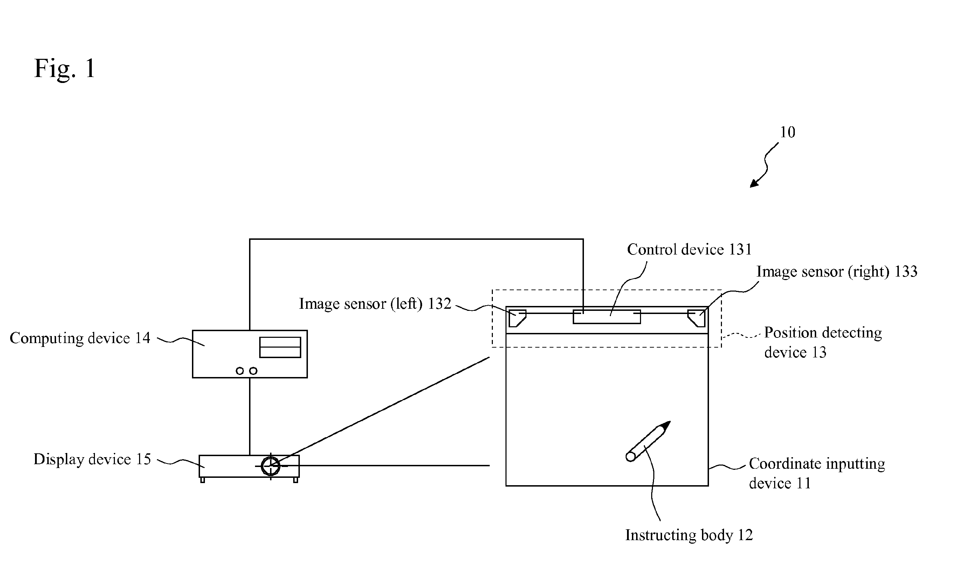

(i) Figure 1 is a view illustrating a schematic configuration of a general image processing system 10 having a position detecting device that uses an image sensor.

In Figure 1, the general image processing system 10 includes a coordinate inputting device 11, an instructing body 12, a position detecting device 13 which detects a coordinate position of the instructing body 12, a computing device 14, and a display device 15.

The position detecting device 13 has a control device 131, an image sensor (left) 132, and an image sensor (right) 133. The image sensors 132 and 133 convert received reflected light (an image) to an electrical signal, and transmit the electrical signal to the control device 131. The control device 131 calculates the coordinate position (X, Y) of the instructing body 12 based on the intensity of the received electrical signal, and transmits the coordinate information to the computing device 14 such as a PC.

The computing device 14 generates drawing information (characters, lines, figures, or the like) based on the received coordinate information, and the display device 15 displays the drawing information on, for example, an input screen of the coordinate inputting device.

Examples of the instructing body 12 include a finger, a stick, and an electronic pen having a communication function using infrared rays or the like, or an electronic pen to which an additional function to operate in conjunction with the control device 131 is added.

Also, examples of the display device 15 include a device using a projector as shown in Figure 1, and a device using a display screen such as a PDP and an LCD.

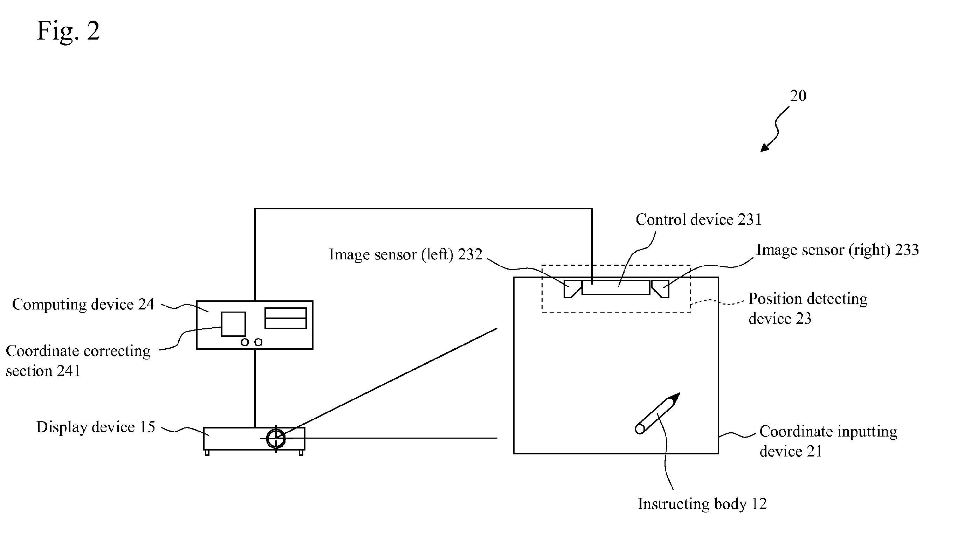

(ii) Figure 2 is a view illustrating a schematic configuration of an image processing system 20 according to the embodiment of the present invention. The image processing system 20 differs from the general image processing system 10 shown in Figure 1 in a physical configuration of a coordinate inputting device 21 and a position detecting device 23, and an internal configuration of a computing device 24.

The position detecting device 23 of the image processing system 20 has a compact configuration as compared to the position detecting device 13 in Figure 1 since right and left image sensors 232 and 233 are arranged adjacent to a control device 231. While the right and left image sensors 132 and 133 are placed at right and left upper corner portions of the coordinate inputting device 11 to cause a distance between the control device 131 and the right and left image sensors 132 and 133 to differ depending on the size of the coordinate inputting device 11, and thereby change the size of the position detecting device 13 in the image processing system 10 in Figure 1, the position detecting device 23 of the image processing system 20 has a constant size regardless of the size of the coordinate device 21. To achieve the above configuration, the wide-angle lens is used for an image pickup camera for use in the image sensors 232 and 233. The details will be described later.

Also, in the coordinate inputting device 21, the reflection efficiency of light retro-reflected on the retro-reflective tape is improved by arranging right and left reflective pieces on right and left side surfaces (a lower half) as described later. Since the reflection efficiency is reduced even by using the retro-reflective tape when a light incident angle becomes larger at the side surface portions of the coordinate inputting device 21, the reflection efficiency is prevented from being lowered by providing the reflective pieces. The reflective pieces will be described in more detail later.

Moreover, the computing device 24 of the image processing system 20 has a coordinate correcting section 241 which corrects the position (a coordinate value) of the instructing body 12 calculated by the control device 231. The coordinate correcting section 241 has, for example, a table of corrected coordinate values corresponding to calculated coordinate values input thereto, and outputs a corrected value in response to an input value. In the present embodiment, while the wide-angle lens is used for the image pickup camera of the image sensor, an image is captured at a position closer to a peripheral portion of the wide-angle lens as the angle of the lens with the reflective tape becomes smaller. Thus, the image tends to be affected by distortion at an end portion of the lens. The coordinate correcting section 241 is provided so as to correct an error in the calculated coordinates due to the distortion.

### [Configuration of an image sensor]

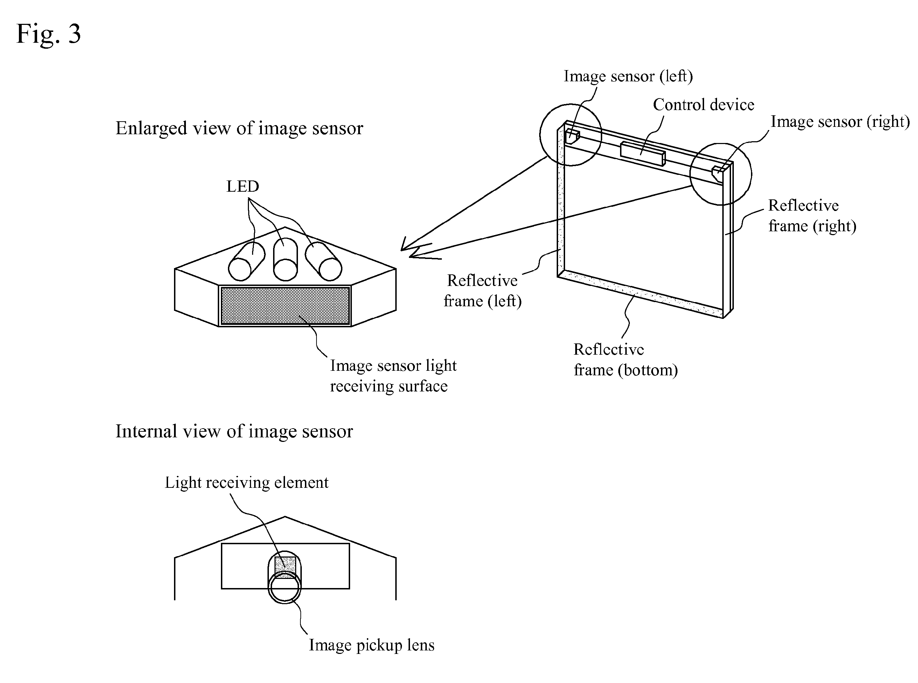

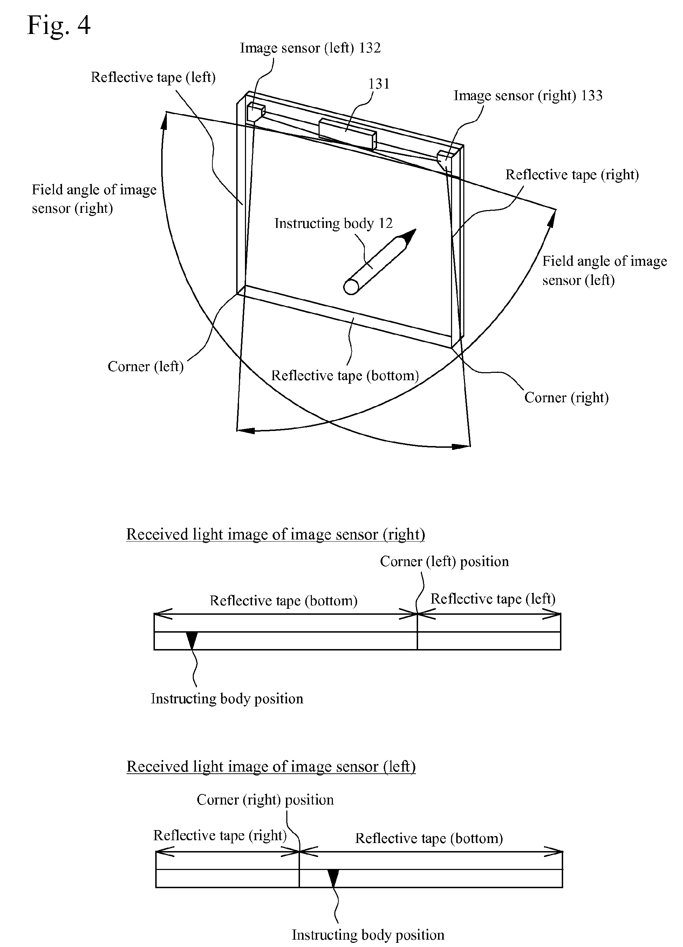

(i) Figure 3 is a view illustrating a detailed configuration of the image sensor of the position detecting device 13 used in the general image processing system. Figure 4 is a view for explaining the function of the image sensor.

The image sensor acquires an image through an image pickup lens by use of a light receiving element such as a CCD and a CMOS. A plurality of light sources for emitting light, such as LEDs, are also placed adjacent to the image sensor. The light emitted from each LED is reflected in the same direction as an incident direction on a retro-reflective tape described below, and the reflected light is received onto the image sensor. Thus, to improve the accuracy of coordinate reading, the optical axis of the image sensor and the optical axis of the light from the light source need to be aligned with each other. A method for improving the accuracy is disclosed in, for example, Patent Literatures 1 and 2.

Also, in the coordinate inputting device 11, a reflective frame is provided so as to surround the periphery of an input surface (at side surface and bottom surface portions), the retro-reflective tape is attached to the reflective frame, and the plurality of LEDs provided on, for example, an upper surface portion of the image sensor emit light onto the reflective tape. A reflective material having retro-reflectivity such as a corner cube reflector is used for the reflective tape. The light emitted from the LED is retro-reflected in the same direction as the incident direction on the retro-reflective tape, and the image sensor receives the reflected light. A shadow is detected on the image sensor by creating an environment in which the light ray is emitted onto the input surface as described above, and blocking the light ray with the instructing body approaching the input surface. The position is acquired by the plurality of image sensors (the right and left image sensors 132 and 133), and the control device 131 calculates the coordinates. In the case of the above image sensor-type position detecting device 13, it is necessary to align or bring closer the optical axes of the camera and the light source as described above. To this end, in Patent Literature 1, light sources are placed adjacent to the top, bottom, right, and left of an image sensor, and in Patent Literature 2, the optical axes of a camera and a light source are aligned with each other by use of a half mirror.

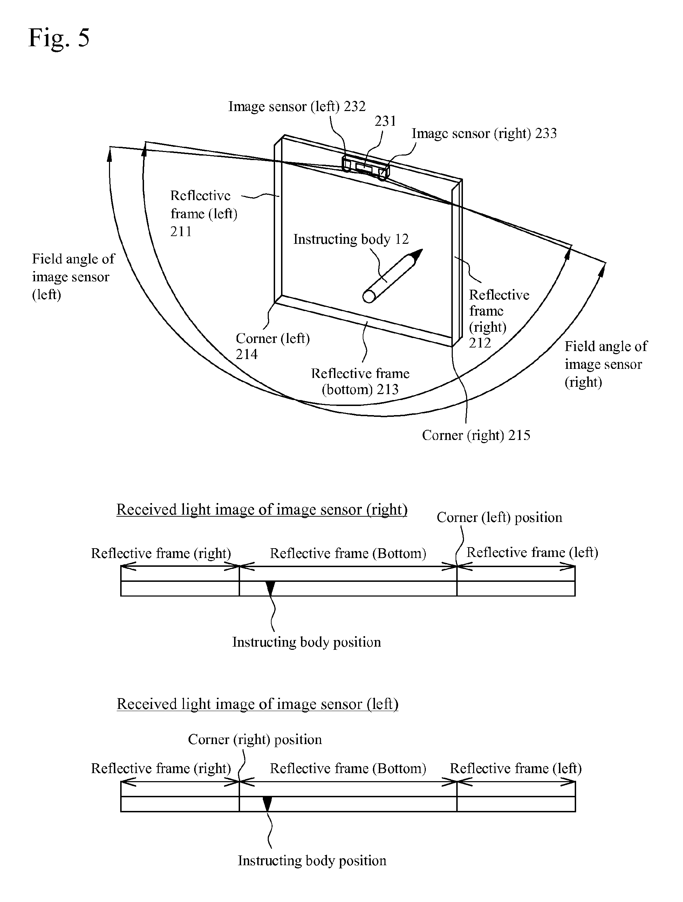

(ii) Figure 5 is a view for explaining the position detecting device 23 according to the embodiment of the present invention. In the position detecting device 23, the wide-angle lens is used for the image pickup cameras of the image sensors 232 and 233, so that the right and left image sensors 232 and 233 can be arranged close to the center of an upper portion of the coordinate inputting device 21. The size of the position detecting device can be thereby made compact. The respective image sensors pick up an image of an entire region of the reflective tape. Since the respective image sensors of the position detecting device 23 according to the present embodiment can capture the image of the entire region to which the reflective tape is attached by using the wide-angle lens, it is not necessary to place the right and left image sensors 232 and 233 at right and left upper corner portions of the coordinate inputting device 21 unlike in the position detecting device 11 in Figure 4.

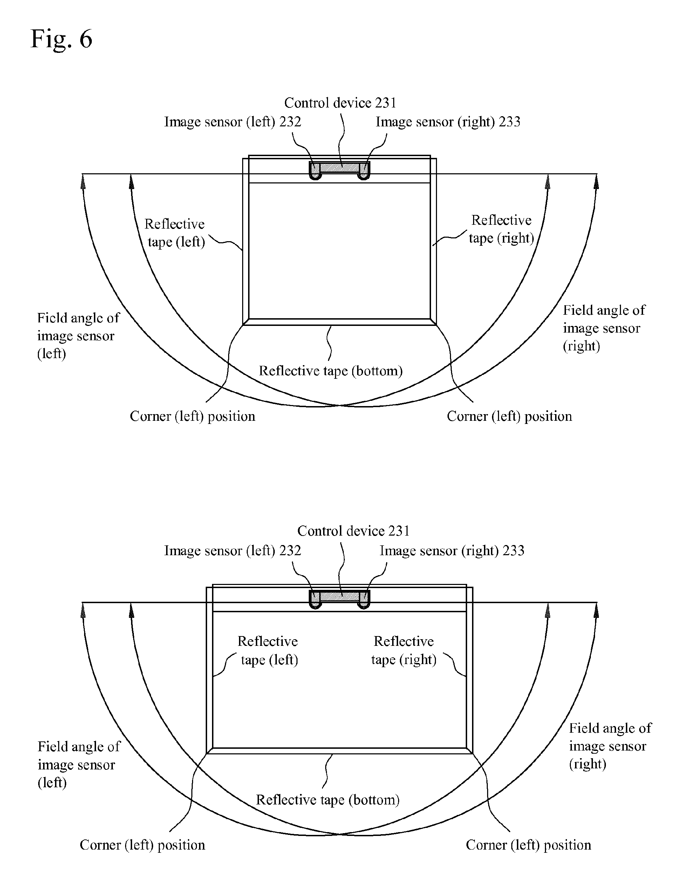

Figure 6 is a view illustrating that there is no need to change the size of the position detecting device 23 even when the size of an input surface of the coordinate inputting device 21 is changed. As described above, the wide-angle lens is placed at each of the image sensors 232 and 233 of the position detecting device 23. Therefore, the image sensors 232 and 233 respectively cover the entire region to which the reflective tape (left, right, and bottom) is attached. It is thus not necessary to arrange the respective image sensors 232 and 233 at the right and left upper corner portions of the coordinate inputting device 21, and the size of the position detecting device 23 can be made constant regardless of the size of the coordinate inputting device 21.

### [Sensitivity of position detection]

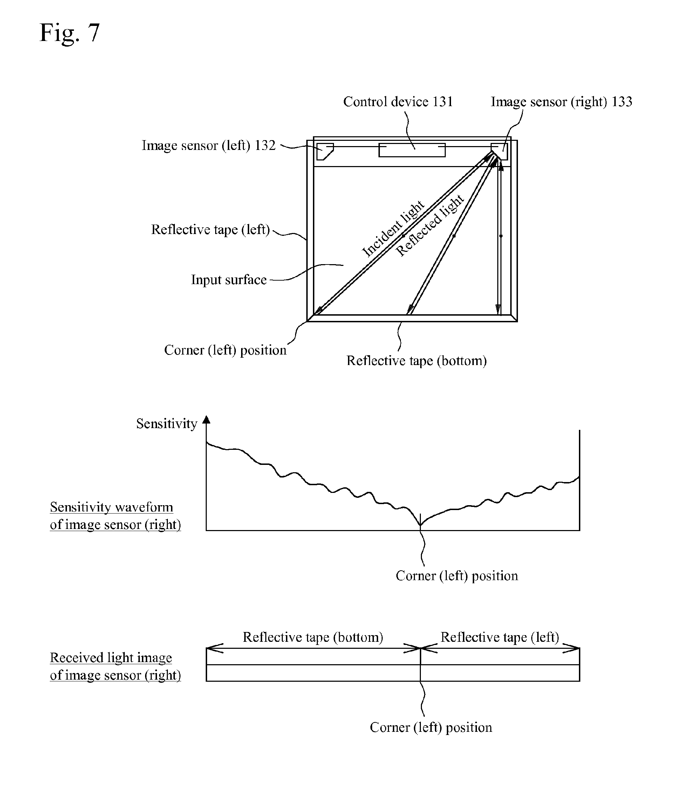

(i) Figure 7 is a view for explaining the sensitivity of the position detecting device 13 of the general image processing system 10.

As is understood from Figure 7, right and left lower corner portions are farthest from the respective image sensors 132 and 133. Thus, the intensity of the LED light is attenuated, and the amount of light (the amount of reflected light) reaching the image sensors 132 and 133 becomes smallest. Thus, since the amount of light reaching the light receiving element of the image sensor is small, the sensitivity is lowered.

The corner portion has relatively lower sensitivity than another portion as described above. When the board is vibrated, the optical path is also vibrated, and the sensitivity of the corner portion may thereby instantaneously become zero in some cases. In this case, the respective image sensors may determine that the instructing body 12 is detected, and erroneously calculate the coordinate value (the occurrence of malfunction).

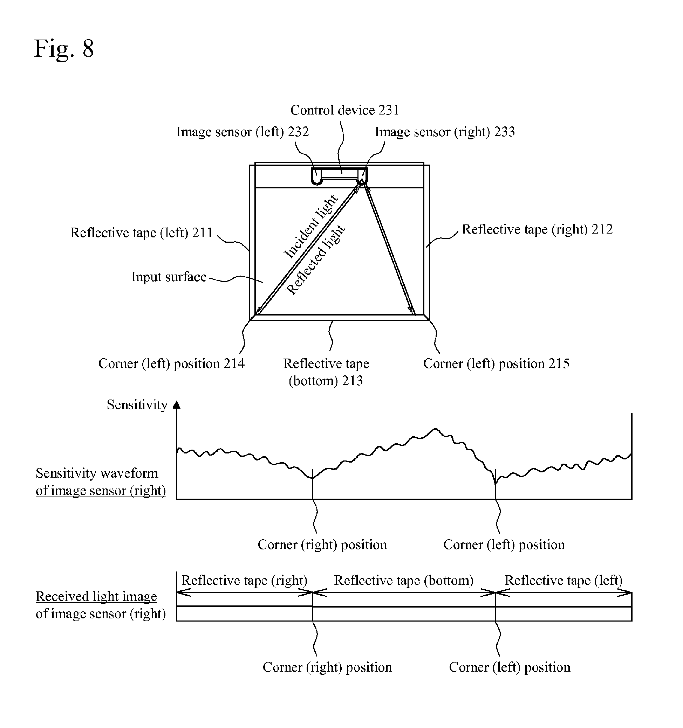

(ii) Figure 8 is a view for explaining the sensitivity of the position detecting device 23 of the image processing system 20. As shown in Figure 8, since the length of the position detecting device 23 in a longitudinal direction is shortened, distances from the image sensors 232 and 233 to right and left lower corner portions 214 and 215 with lowest sensitivity can be shortened. The sensitivity on light receiving elements of the image sensors 232 and 233 can be thereby improved. Accordingly, resistance to malfunction due to board vibrations or the like can be improved.

### [Improvement in sensitivity (improvement in reflection efficiency)]

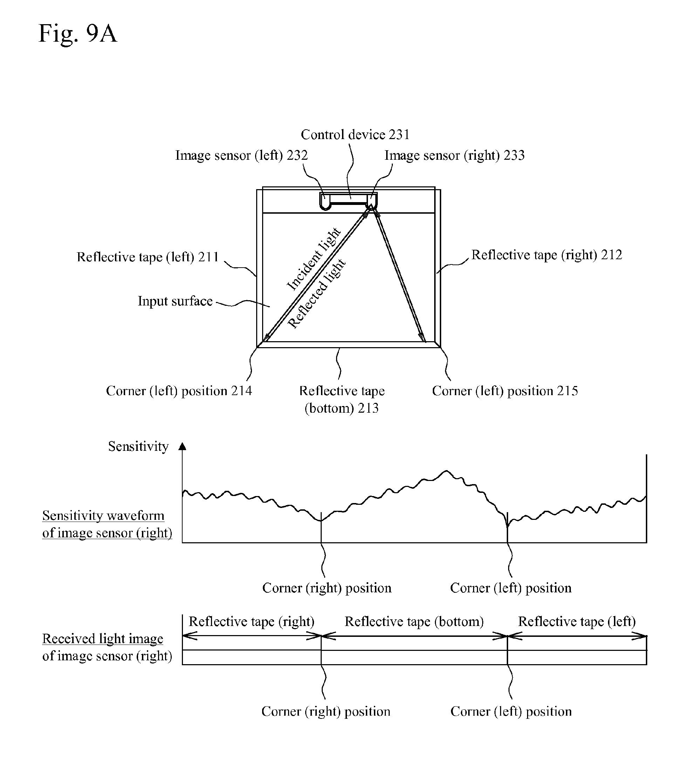

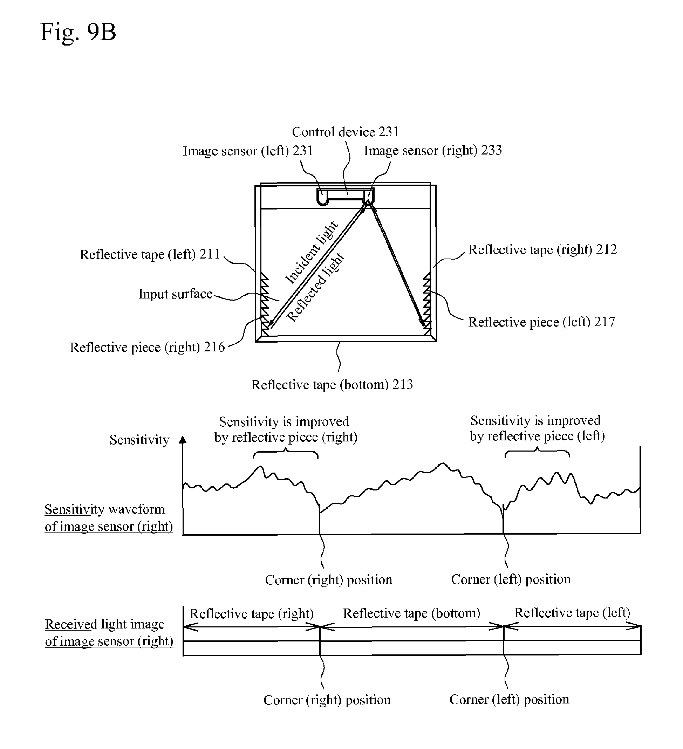

Figures 9 are views for comparing the sensitivity in a case in which a section which improves the sensitivity (the reflective piece) is not provided, and the sensitivity in a case in which the section is provided in the coordinate inputting device 21 of the image processing system 20. Figure 9A shows the coordinate inputting device 21 and the position detecting device 23 not including the reflective piece, and a sensitivity waveform in this case, and Figure 9B shows the coordinate inputting device 21 and the position detecting device 23 including the reflective pieces, and a sensitivity waveform in this case.

As shown in Figure 9B, the reflective pieces having a saw-toothed shape and whose respective surfaces defining the saw-toothed shape are directed toward the image sensors 232 and 233 of the position detecting device are provided at lower half portions of the right and left side surfaces of the input surface in the coordinate inputting device 21 according to the present embodiment. Although the respective surfaces of each of the reflective pieces are ideally formed to allow the incident angle of the LED light to be 90 degrees, a certain effect can be obtained even when the respective surfaces are directed toward the image sensors to some extent since reflective tapes 211 to 213 are the retro-reflective tapes.

When the sensitivity waveforms in Figures 9A and 9B are compared, a signal intensity from reflective pieces 216 and 217 (Figure 9B) is higher than that in the case without the reflective piece (Figure 9A), so that it is found that the sensitivity is improved. Thus, there is a lower possibility that the instructing body 12 is erroneously detected in the case with the reflective pieces than that in the case without the reflective piece.

It is less necessary to provide the reflective pieces when the input surface of the coordinate device 21 has a larger aspect ratio. For example, in a case in which the aspect ratio is 4:3, the incident angle of the LED light at the side surface becomes larger, so that the degree of improvement in the sensitivity is also increased. In a case of 16:9, the incident angle of the LED light becomes smaller than that in the case of 4:3, so that the degree of improvement in the sensitivity is smaller than that in the case of 4:3.

### [Necessity of correction of a calculated coordinate value]

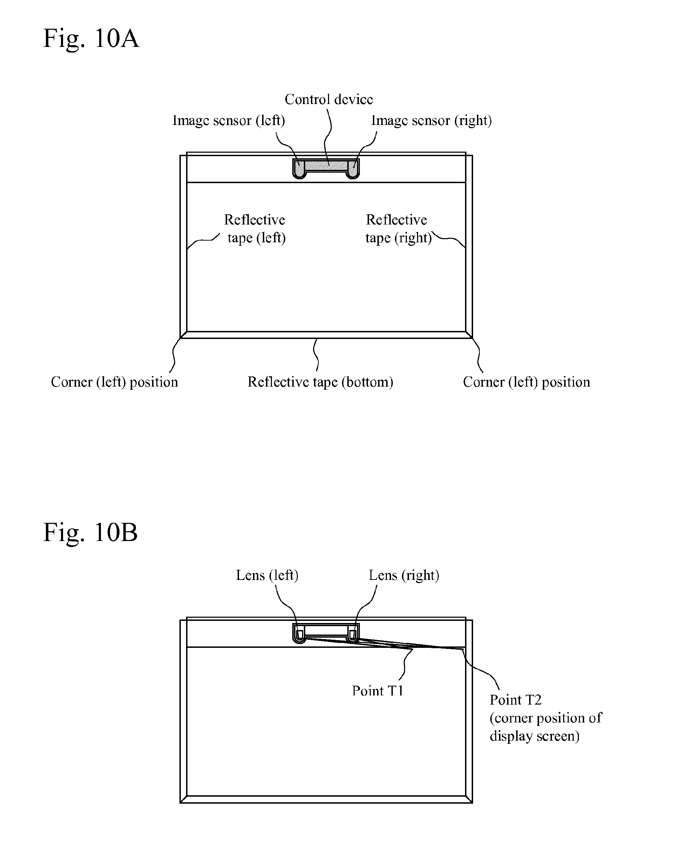

Figures 10 are views for explaining that it is necessary to correct the calculated coordinate position of the instructing body 12. A case in which the instructing body 12 is at a point T1, and a case in which the instructing body 12 is at a point T2 as shown in Figure 10B are considered. As shown in Figure 10B, while the positions of the points T1 and T2 in a height (Y) direction are the same, the point T2 is located on the outer side of the input surface of the coordinate inputting device 21 from the point T1. As for points having the same Y coordinate, an angle between each point and the lens (the wide-angle lens) of each of the right and left image sensors 232 and 233 is reduced as the point is closer to the outer side. As the angle becomes smaller, the lens captures an object closer to the peripheral portion of the lens, and the image thus tends to be affected by the distortion at the end portion of the lens. Thus, the error in the coordinate reading is increased. According to a study by the present inventors, for example, a reading error of 5 mm occurs at the point T2 in a case of a diagonal length of 77 inches (the aspect ratio is 4:3), and a reading error of about 10 mm occurs at the point T2 in a case of a diagonal length of 88 inches (the aspect ratio is 16:9).

Thus, in the present embodiment, the computing device 24 of the image processing system 20 has the coordinate correcting section 241, which corrects the reading error (an error in the coordinate calculation) due to the distortion of the lens. For example, an error amount corresponding to a distortion amount may be preliminarily obtained, and a coordinate value calculated in the case in which the lens has distortion may be corrected based on the preliminarily-obtained error amount.

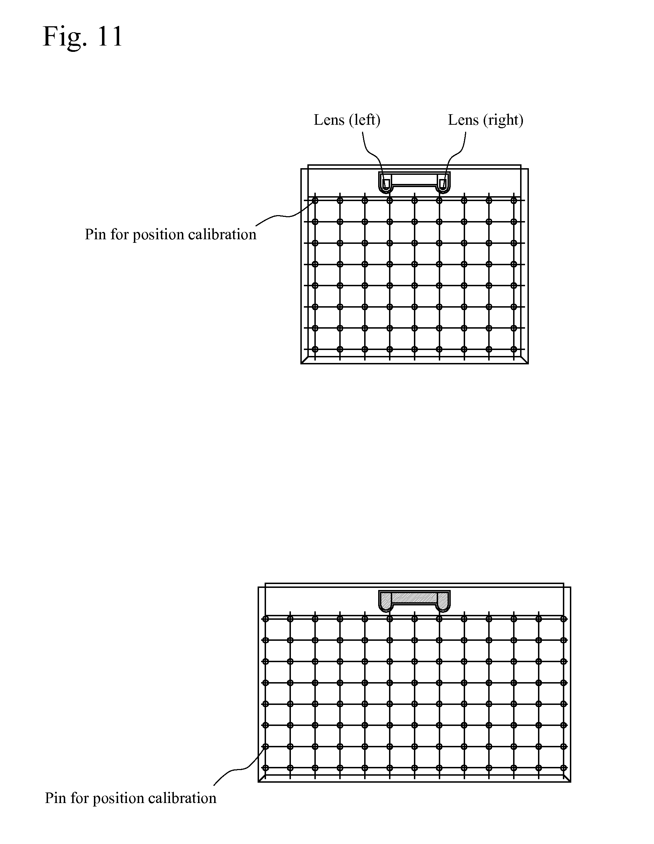

A following process is performed so as to preliminarily obtain the error amount by the lens. Since respective wide-angle lenses have different distortion characteristics, pins are set up at respective coordinates as shown in Figures 11, and the position of each pin is adjusted (calibrated) in relation to positions on the image sensors 232 and 233 through the lens. The position is approximated to an optimum value in X-axis and Y-axis directions by use of a method of least squares based on the above information. The error amount is obtained by comparing the optimum value and an actually-measured value (the calculated value by the control device 231), and is thereby used as the corrected value. Since the input surface has a larger size in the case of the aspect ratio of 16:9 than the case of the aspect ratio of 4:3, the number of positioning pins is also increased.

Although the computing device 24 is provided with the coordinate correcting section 241, the control device 231 may include the function of the coordinate correcting section 241.

### [Conclusion]

In the embodiment of the present invention, each of the image sensors (at least two image sensors) of the position detecting device has the wide-angle lens which covers substantially the entire region of the side surface and bottom surface portions of the frame body as the image pickup range (see Figures 5 and 6). Since the field angle is widened by using the wide-angle lens, the at least two image sensors are arranged adjacent to the control device and fixed to the control device. The position detecting device is placed in substantially the center of the upper surface portion of the coordinate inputting device. Accordingly, the position detecting device can be made compact, and the position detection accuracy can be improved. Since the position detecting device can be made compact, displacement of the image sensors (left) (right) due to torsion or bending of the position detecting device can be also reduced. Furthermore, since the length of the position detecting device in the longitudinal direction is shortened, the distances to the corner portions with lowest sensitivity (the right and left lower corner portions of the coordinate inputting device) from the image sensors can be shortened. Therefore, the resistance to the malfunction by board vibrations or the like can be improved.

Since the position detecting device is made compact, wiring lines and ICs can be also reduced. Each of the image sensors is connected to the control device via a cable, and transmits an image at 60 to 100 frames per second to the control device. However, since the cable has a length of several tens of cm, the attenuation of signals needs to be considered. Thus, it has been necessary to use a method of converting the image to a low-voltage signal by use of an LVDS or the like in conventional cases. However, since the position detecting device is made compact, the signal attenuation may not be considered. Also, when the position detecting device is made compact, the resistance to the malfunction by board vibrations or the like can be improved.

Moreover, while separate position detecting devices need to be prepared for each size of the coordinate inputting device in conventional cases, the common position detecting device can be used regardless of the size of the coordinate inputting device in accordance with the embodiment of the present invention.

When the wide-angle lens is used, the acquired image may be distorted at the lens peripheral portion. To solve the problem, the function to correct the coordinate value of the instructing body calculated by the position detecting device and eliminate the influence of the distortion of the wide-angle lens may be provided. Accordingly, a more accurate coordinate value of the instructing body can be acquired, and an appropriate image is output from the display device.

The reflective pieces which improve the reflectivity are also provided at the side surface portions of the frame body of the coordinate inputting device. Although an image of a portion with a large light incident angle may not be picked up with good sensitivity even by using the retro-reflective tape in some cases, the reflectivity can be improved by providing the reflective pieces, and the light receiving sensitivity of the image sensor can be thereby improved.

## Claims

1. An image processing system comprising:
a coordinate inputting device having a coordinate input surface which allows an instructing body to input a coordinate, and a frame body which is provided so as to surround at least side surface and bottom surface portions of the coordinate input surface, a reflective member having retro-reflectivity being attached to the side surface and bottom surface portions of the frame body;
a position detecting device having at least two image sensors, a plurality of light sources which are provided adjacent to each of the image sensors, and a control device, the plurality of light sources emitting light onto the frame body, a light receiving element of each of the image sensors receiving reflected light from the reflective member, and the control device calculating a coordinate value of the instructing body based on information of the received light;
a computing device which performs image processing by using the coordinate value of the instructing body calculated by the position detecting device; and
a display device which outputs an image processing result obtained by the computing device,
wherein the position detecting device is placed on an upper surface portion of the frame body of the coordinate inputting device, and
each of the at least two image sensors has a wide-angle lens which covers a substantially entire region of the side surface and bottom surface portions of the frame body as an image pickup range.

2. The image processing system according to claim 1,
wherein the at least two image sensors are arranged adjacent to the control device, and
the position detecting device is placed substantially in a center of the upper surface portion of the coordinate inputting device.

3. The image processing system according to claim 2,
wherein the computing device corrects the coordinate value of the instructing body calculated by the position detecting device, and eliminates an influence of distortion of the wide-angle lens.

4. The image processing system according to claim 2,
wherein a reflective piece which improves reflectivity is provided on the side surface portion of the frame body of the coordinate inputting device.

5. A position detecting device mounted to a coordinate inputting device, comprising:
at least two image sensors;
a plurality of light sources which are provided adjacent to each of the image sensors; and
a control device,
wherein the at least two image sensors are fixedly placed adjacent to the control device,
each of the image sensors has a light receiving element, the light receiving element receiving reflected light from an object when light is emitted onto the object from the plurality of light sources,
the control device calculates a coordinate value of an instructing body on an input surface of the coordinate inputting device based on information of the received reflected light, and
each of the at least two image sensors has a wide-angle lens which covers a visual field region over almost 180 degrees to right and left sides as an image pickup range.
